(19) **Europäisches Patentamt / European Patent Office / Office européen des brevets**

(11) **EP 4 765 282 A1**

(12) **EUROPEAN PATENT APPLICATION**
published in accordance with Art. 153(4) EPC

(43) Date of publication:
**24.06.2026 Bulletin 2026/26**

(21) Application number: **24908163.9**

(22) Date of filing: **20.12.2024**

(51) International Patent Classification (IPC):
**H01M 10/052** (2010.01)       **H01M 10/0569** (2010.01)
**H01M 10/0568** (2010.01)       **H01M 50/533** (2021.01)
**H01M 50/107** (2021.01)       **H01M 50/538** (2021.01)
**H01M 50/213** (2021.01)       **H01M 4/587** (2010.01)

(52) Cooperative Patent Classification (CPC):
**H01M 4/587; H01M 10/052; H01M 10/0568;
H01M 10/0569; H01M 50/107; H01M 50/213;
H01M 50/533; H01M 50/538;** Y02E 60/10;
Y02P 70/50

(86) International application number:
**PCT/KR2024/020835**

(87) International publication number:
**WO 2025/135881 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.12.2023  KR 20230190175
19.12.2024  KR 20240191913**

(71) Applicant: **LG Energy Solution, Ltd.
Seoul 07335 (KR)**

(72) Inventors:
• **CHOI, Yeon Jun
Daejeon 34122 (KR)**

• **SHIN, Won Kyung
Daejeon 34122 (KR)**
• **PARK, Geun Ho
Daejeon 34122 (KR)**
• **KO, Hyeon Min
Daejeon 34122 (KR)**
• **KIM, Jung Jin
Daejeon 34122 (KR)**
• **KIM, Byung Ju
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CYLINDRICAL LITHIUM SECONDARY BATTERY**

(57)    The present invention relates to a cylindrical lithium secondary battery comprising: an electrode assembly comprising a positive electrode, a negative electrode, and a separator disposed between the positive electrode and the negative electrode; an electrolyte; and a battery case accommodating the electrode assembly and the electrolyte, wherein the electrolyte comprises a lithium salt and an organic solvent, and a P value defined by Equation 1 below is less than 8.7.

[Equation 1]

$$P = \frac{R}{H} \times \frac{t_a L_a}{V_c P_a} \times 100$$

In Equation 1, H (unit: mm) means a height of the lithium secondary battery, R (unit: mm) means a diameter of the lithium secondary battery, $t_a$ (unit: $\mu$m) means a thickness of the negative electrode, $L_a$ (unit: g/25 cm$^2$) means a loading amount of the negative electrode, $P_a$ (unit: %) means a porosity of the negative electrode, and $V_c$ (unit: cm$^3$) means a volume of empty space inside the lithium secondary battery.

**(Cont. next page)**

EP 4 765 282 A1

[FIG. 5]

**Description**

**TECHNICAL FIELD**

Cross-reference to Related Applications

This application claims the benefit of Korean Patent Application No. 10-2023-0190175, filed on December 22, 2023, and Korean Patent Application No. 10-2024-0191913, filed on December 19, 2024, the contents of which are incorporated herein by reference.

Technical Field

The present invention relates to a cylindrical lithium secondary battery, and more particularly, to a cylindrical lithium secondary battery having excellent rapid charging characteristics.

**BACKGROUND ART**

With the technological advancement of electric vehicles, portable electronic devices or the like, the demand for lithium secondary batteries as an energy source is rapidly increasing.

Lithium secondary batteries may be classified into cylindrical, prismatic, and pouch-type batteries according to the shape of a battery case. Among them, cylindrical batteries are obtained by accommodating a jelly-roll-type electrode assembly manufactured by sequentially laminating a sheet-shaped positive electrode, separator, and negative electrode and then winding in one direction, in a cylindrical battery case, and then covering the top of the battery case with a cap plate to seal. The positive and negative electrodes are each equipped with a strip-shaped positive electrode tab and a negative electrode tab, and the positive and negative electrode tabs are connected to electrode terminals and electrically connected to an external power source. For reference, the positive electrode terminal is a cap plate, and the negative electrode terminal is a battery case.

In particular, with the recent advancement of electric vehicle technology, the demand for high-capacity batteries has increased, and the development and use of large-volume, largesized cylindrical secondary batteries are being reviewed. In the case of the conventional generally used small cylindrical batteries, that is, cylindrical secondary batteries with form factors of 1865 or 2170, high rapid charging performance was not required.

In contrast, rapid charging characteristics are becoming very important for large cylindrical secondary batteries because they are applied to electric vehicles. However, if rapid charging is performed at high voltage and high C-rate, an electrolyte may decompose rapidly, generating a large amount of gas such as $CO_2$ and $CH_4$, and the pressure inside the battery increases due to the generated gas. As an electrolyte is pushed out by the increased internal pressure of the battery, the electrolyte becomes localized, and the lithium ions moved through the localized electrolyte are concentrated in a specific negative electrode region, causing a lithium plating (Li-plating) phenomenon by which lithium ions that were not inserted into the negative electrode are precipitated on the negative electrode surface. As a result, the lithium plating phenomenon leads to deterioration or ignition of the battery, which has a negative influence on the lifespan and safety of the battery.

Therefore, it is necessary to develop a lithium secondary battery with excellent rapid charging performance by preventing a lithium plating phenomenon during rapid charging and improving the life characteristics and safety of the battery.

**DISCLOSURE OF THE INVENTION**

**TECHNICAL PROBLEM**

The present invention is intended to solve the above-described problems and to provide a cylindrical lithium secondary battery having excellent life characteristics and stability by preventing a lithium plating phenomenon during rapid charging.

**TECHNICAL SOLUTION**

[1] The present invention provides a cylindrical lithium secondary battery comprising: an electrode assembly comprising a positive electrode, a negative electrode, and a separator disposed between the positive electrode and the negative electrode; an electrolyte; and a battery case accommodating the electrode assembly and the electrolyte, wherein the electrolyte comprises a lithium salt and an organic solvent, and a P value defined by Equation 1 below is less than 8.7.

[Equation 1]

$$P = \frac{R}{H} \times \frac{t_a L_a}{V_c P_a} \times 100$$

In Equation 1, H (unit: mm) means a height of the lithium secondary battery, R (unit: mm) means a diameter of the lithium secondary battery, $t_a$ (unit: $\mu$m) means a thickness of the negative electrode, $L_a$ (unit: g/25 cm$^2$) means a loading amount of the negative electrode, $P_a$ (unit: %) means a porosity of the negative electrode, and $V_c$ (unit: cm$^3$) means a volume of empty space inside the lithium secondary battery.

[2] The present invention provides the cylindrical lithium secondary battery according to [1], wherein the P value represented by Equation 1 is 7.4 to 8.6.

[3] The present invention provides the cylindrical lithium secondary battery according to [1] or [2], wherein $V_c$ is 17.5 cm$^3$ to 25 cm$^3$.

[4] The present invention provides the cylindrical lithium secondary battery according to at least one of [1] to [3], wherein a ratio ($V_c$/V) of a volume ($V_c$) of the empty space inside the lithium secondary battery to a total volume (V) of inside space of the battery case is 0.08 to 0.25.

[5] The present invention provides the cylindrical lithium secondary battery according to at least one of [1] to [4], wherein a ratio (R/H) of H to R is 0.4 or more.

[6] The present invention provides the cylindrical lithium secondary battery according to at least one of [1] to [5], wherein $P_a$ is 23.5% or more.

[7] The present invention provides the cylindrical lithium secondary battery according to at least one of [1] to [6], wherein $L_a$ is 0.25 g/25 cm$^2$ to 0.45 g/25 cm$^2$.

[8] The present invention provides the cylindrical lithium secondary battery according to at least one of [1] to [7], wherein $t_a$ is 180 $\mu$m to 200 $\mu$m.

[9] The present invention provides the cylindrical lithium secondary battery according to at least one of [1] to [8], wherein the negative electrode comprises a negative electrode active material layer comprising a negative electrode active material, and the negative electrode active material comprises a carbon-based active material.

[10] The present invention provides the cylindrical lithium secondary battery according to at least one of [1] to [9], wherein the negative electrode comprises a negative electrode active material layer comprising a negative electrode active material, and the negative electrode active material is comprised in 90 wt% to 99 wt% based on the total weight of the negative electrode active material layer.

[11] The present invention provides the cylindrical lithium secondary battery according to at least one of [1] to [10], wherein a concentration of the lithium salt is 1.0 M to 1.5 M.

[12] The present invention provides the cylindrical lithium secondary battery according to at least one of [1] to [11], wherein the lithium salt comprises one or more selected from the group consisting of LiPF$_6$, LiClO$_4$, LiAsF$_6$, LiBF$_4$, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, and LiI.

[13] The present invention provides the cylindrical lithium secondary battery according to at least one of [1] to [12], wherein the organic solvent comprises one or more selected from the group consisting of a cyclic carbonate-based organic solvent, a linear carbonate-based organic solvent, a linear ester-based organic solvent and a cyclic ester-based organic solvent.

[14] The present invention provides the cylindrical lithium secondary battery according to at least one of [1] to [13], wherein the cyclic lithium secondary battery is a 46110 cell, 48110 cell, 4880 cell or 4680 cell.

[15] The present invention provides the cylindrical lithium secondary battery according to at least one of [1] to [14], wherein the cylindrical lithium secondary battery comprises a non-coated part on which an active material layer is not formed on at least a portion of the positive electrode and the negative electrode, and the non-coated part of the positive electrode and the non-coated part of the negative electrode are defined as electrode tabs.

[16] The present invention provides the cylindrical lithium secondary battery according to [15], wherein the positive electrode non-coated part and the negative electrode non-coated part are formed along a winding direction of the electrode assembly on one end of the positive electrode and negative electrode, respectively, a current collector plate is coupled to each of the positive electrode non-coated part and the negative electrode non-coated part, and the current collector plate is connected to an electrode terminal.

[17] The present invention provides the cylindrical lithium secondary battery according to [15] or [16], wherein the positive and negative electrode non-coated parts are processed into a plurality of independently bendable segments, and at least some of the plurality of segments are bended toward a winding center of the electrode assembly.

[18] The present invention provides the cylindrical lithium secondary battery according to [17], wherein at least some of the bended plurality of segments overlap on the upper and lower sides of the electrode assembly, and the current collector plate is coupled on the overlapped plurality of segments.

[19] The present invention provides a battery pack comprising the cylindrical lithium secondary battery according to any one of [1] to [18] as a unit cell.

**ADVANTAGEOUS EFFECTS**

The cylindrical lithium secondary battery according to the present invention may suppress the localization phenomenon of an electrolyte due to an increase in internal pressure of the battery even if gas is generated due to the decomposition of electrolyte, or the like during rapid charging, by making the form factor, the volume of the empty space inside the battery, and the negative electrode satisfy specific conditions, thereby preventing lithium ions moving during the charging and discharging processes from being concentrated in a specific negative electrode region. Accordingly, a lithium plating phenomenon may be reduced, and the life characteristics and safety of the battery during rapid charging may be improved.

**BRIED DESCRIPTION OF DRAWINGS**

FIG. 1 is a diagram showing a laminate state before winding of an electrode assembly according to the present invention.

FIG. 2 is a cross-sectional view showing the structure of an electrode of an electrode assembly according to an embodiment of the present invention.

FIG. 3 is a diagram for explaining the structure of an electrode assembly according to an embodiment of the present invention.

FIG. 4 is a cross-sectional view showing the structure of a cylindrical lithium secondary battery according to an embodiment of the present invention.

FIG. 5 is a cross-sectional view showing the structure of a cylindrical lithium secondary battery according to another embodiment of the present invention.

FIG. 6 is a diagram for explaining a battery pack according to the present invention.

**BEST MODE FOR CARRYING OUT THE INVENTION**

Hereinafter, the present invention will be explained in more detail.

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

Terms used in the present specification are used only to explain embodiments and are not intended to limit the present invention. Singular expression includes plural expression, unless otherwise clearly indicated.

In the present specification, the terms "comprise," "include," or "have" are intended to specify the presence of a feature, number, step, component, or combination thereof, but should be understood not to preclude the possibility of the presence or addition of one or more other features, numbers, steps, components, or combinations thereof.

In the present invention, a "negative electrode loading amount ($L_a$, unit: $g/25\ cm^2$)" means the mass (g) of the negative electrode active material layer included per $25\ cm^2$ area, and after the negative electrode is punched out to a size of 5 cm x 5 cm, the weight $W_1$ of the punched area and the weight $W_2$ of the negative electrode current collector are measured, and if the negative electrode active material layer is formed on both sides of the negative electrode current collector, the negative electrode loading amount may be obtained by substituting into [Equation A-1], and if the negative electrode active material layer is formed on one side of the negative electrode current collector, the negative electrode loading amount may be obtained by substituting into [Equation A-2].

Negative electrode loading amount $L_a$ ($g/25\ cm^2$) = $(W_1 - W_2)/2$        [Equation A-1]

Negative electrode loading amount $L_a$ ($g/25\ cm^2$) = $(W_1 - W_2)$        [Equation A-2]

In the present invention, the "volume of empty space inside a lithium secondary battery ($V_c$, unit: $cm^3$)" means the space inside the battery case of a lithium secondary battery excluding the space occupied by an electrolyte and an electrode assembly, and specifically, may be measured after performing an activation process after manufacturing the lithium secondary battery, but is not limited thereto.

The activation means a process of charging and/or discharging a lithium secondary battery that has been manufactured but has not been charged and discharged, to impart electrical characteristics, and forming a solid electrolyte interphase (SEI) film on an electrode to stabilize the battery, thereby making the battery in a state capable of being practically used.

In relation to $V_C$, the activation may be implemented by performing the process of charging the lithium secondary battery to a voltage of 4.0 V or higher at 25°C and discharging to a voltage of 2.5 V or lower at least once, but is not limited thereto.

The "volume of empty space inside a lithium secondary battery ($V_C$, unit: $cm^3$)" may be measured by substituting a dead volume $V_d$, pore volume $V_p$, and electrolyte volume $V_e$ inside the battery case in the lithium secondary battery into [Equation B] below.

$$\text{Volume of empty space inside a lithium secondary battery } V_c \text{ (cm}^3) = V_d + V_p - V_e \qquad \text{[Equation B]}$$

Specifically, in Equation B, the dead volume $V_d$ inside the battery case means the volume of the cylindrical lithium secondary battery excluding the volume occupied by the electrode assembly and the volume occupied by the battery case. The volume of the cylindrical lithium secondary battery is a volume measured based on the external shape of the cylindrical lithium secondary battery, and specifically means the volume of the space occupied by the external shape of the cylindrical lithium secondary battery. In this case, the measurement may be conducted without considering the internal space of the cylindrical lithium secondary battery. In this case, the external shape of the lithium secondary battery may be the same as the external shape of the battery case when the battery case is sealed.

The volume occupied by the electrode assembly means the sum of the volumes occupied by the negative electrode, positive electrode, and separator included in the electrode assembly. In this case, the volume occupied by the electrode assembly may be measured based on the external shape of the positive electrode, negative electrode, and separator without considering the volume of the pores included in the positive electrode, negative electrode, and separator.

The volume occupied by the battery case means the volume of the space physically occupied by the battery case itself, and includes only the structural part of the battery case itself excluding the internal space of the battery case, and may be measured based on the external shape of the battery case.

The pore volume $V_p$ may be measured by adding the pore volume included in the negative electrode and positive electrode and the pore volume of the separator interposed between the positive electrode and negative electrode, and specifically, may be measured by adding the pore volume included in the negative electrode and positive electrode and the pore volume of the separator and SRS coating layer interposed between the positive electrode and negative electrode. In this case, the volume of each pore of the positive electrode, negative electrode, separator, and SRS coating layer may be obtained by multiplying each volume of the positive electrode, negative electrode, separator, and SRS coating layer by respective porosity.

The electrolyte volume $V_e$ means the total of the volume of the electrolyte impregnated in the internal pore of the electrode assembly, and the volume of the electrolyte located outside the electrode assembly in the internal space of the battery case. Specifically, $V_e$ may be calculated by dividing the weight of the electrolyte by the density of the electrolyte.

The weight of the electrolyte may be measured by (1) measuring the weight ($M_L$) of a lithium secondary battery including an electrode assembly, an electrolyte, and a battery case, and in a sealed state of the battery case after activation, (2) disassembling the lithium secondary battery to remove the electrolyte present in the battery case, (3) immersing the battery case and the electrode assembly in a solvent such as dimethyl carbonate to remove the electrolyte present in the surface of the battery case, the surface of the electrode assembly, and the internal pores, and then drying the battery case and the electrode assembly, and (4) measuring the weight ($M_C$) of the dried battery case and the weight ($M_A$) of the dried electrode assembly, and then substituting the measured $M_L$, $M_C$, and $M_A$ into Equation B-1 below.

$$\text{[Equation B-1]}$$

$$\text{Weight of electrolyte} = M_L - M_C - M_A$$

In this specification, the "negative electrode porosity" may be calculated by [Equation C] below.

Porosity (%) = {1 - (density of negative electrode active material layer/true density of negative electrode active material layer)} x 100 [Equation C]

In Equation C, the true density of the negative electrode active material layer is a calculated density derived from the density and mass ratio of each component material forming the negative electrode active material layer under the assumption that no pores are included, and the density of the negative electrode active material layer is a measured density of the negative electrode active material layer, measured by sampling the negative electrode active material layer to a certain size.

As a result of repeated research to develop a lithium secondary battery capable of suppressing a lithium plating phenomenon during rapid charging and improving life characteristics and safety, the inventors found that, if the form factor, the volume of the empty space inside the battery, and the negative electrode satisfy specific conditions, the lithium plating phenomenon may be minimized by suppressing electrolyte localization due to gas generated during rapid charging, and the rapid charging life characteristics and safety may be improved, and thus completed the present invention.

The cylindrical lithium secondary battery according to the present invention includes at least one of the configurations disclosed below, and may include any combination of technically possible configurations among the configurations below.

Hereinafter, the present invention will be described in more detail.

**Cylindrical Lithium Secondary Battery**

The cylindrical lithium secondary battery according to the present invention is a cylindrical lithium secondary battery comprising: an electrode assembly comprising a positive electrode, a negative electrode, and a separator interposed between the positive electrode and the negative electrode; an electrolyte; and a battery case in which the electrode assembly and the electrolyte are accommodated, wherein the electrolyte comprises a lithium salt and an organic solvent, and a P value defined by Equation 1 below is less than 8.7.

$$[\text{Equation } 1]$$

$$P = \frac{R}{H} \times \frac{t_a L_a}{v_c p_a} \times 100$$

In Equation 1, H (unit: mm) means the height of the lithium secondary battery, R (unit: mm) means the diameter of the lithium secondary battery, $t_a$ (unit: $\mu$m) means the thickness of the negative electrode, $L_a$ (unit: g/25 cm$^2$) means the negative electrode loading amount, $P_a$ (unit: %) means the negative electrode porosity, and $V_c$ (unit: cm$^3$) means the volume of the empty space inside the lithium secondary battery.

The cylindrical lithium secondary battery according to the present invention has a P value defined by Equation 1 of less than 8.7, specifically, less than 8.7, 8.6 or less, 8.5 or less, 8.4 or less, 8.3 or less, 8.2 or less, 8.1 or less, 8.0 or less, 7.9 or less, 7.8 or less, 7.7 or less, 7.6 or less, or 7.5 or less, and may be 5 or more, 5.2 or more, 5.4 or more, 5.6 or more, 5.8 or more, 6 or more, 6.2 or more, 6.4 or more, 6.6 or more, 6.8 or more, 7 or more, 7.1 or more, 7.2 or more, 7.3 or more, 7.4 or more, or 7.5 or more. For example, the P value defined by Equation 1 may be less than 8.7, 5 to 8.6, 7.4 to 8.5, 7.4 to 8, or 7.4 to 7.7.

Recently, with the development of electric vehicle technology, the rapid charging characteristics of lithium secondary batteries are very important in order to meet the demands of increased driving distance and fast charging speed. During the rapid charging process of a lithium secondary battery, if high voltage and/or high rate charging and discharging are repeated, lithium ions that are not inserted into the negative active material are precipitated and exist on the surface of the negative electrode in the form of $Li_2CO_3$, or the like, and as a result, side reactions of the electrolyte are aggravated, and a large amount of gas such as $CO_2$ and $CH_4$ is generated inside the battery. The generated gas moves to the empty space inside the battery, and if the empty space inside the battery is insufficient to relieve the pressure caused by the generated gas, an electrolyte localization phenomenon occurs by which the electrolyte is squeezed due to the pressure caused by the gas. As a result, the electrolyte does not make even contact with the positive and negative electrodes and is located in a localized manner in a specific area, and the lithium ions do not move evenly but are concentrated in a specific area, leading to the lithium plating phenomenon by which the lithium ions that were not accepted by the negative electrode are precipitated on the surface of the negative electrode. The lithium plating phenomenon causes a loss of capacity in the lithium secondary battery, deteriorates the lithium secondary battery and reduces life characteristics, and leads to additional electrolyte side reactions, further reducing the performance of the lithium secondary battery. In addition, the lithium plating phenomenon may damage the separator, causing a short circuit inside the battery and causing an explosion or ignition of the battery, which may influence the safety of the battery.

In order to solve the problems, for the cylindrical lithium secondary battery according to the present invention, the form factor, the volume of the empty space inside the battery, and the characteristics of the negative electrode are simultaneously adjusted to specific conditions.

Specifically, the cylindrical lithium secondary battery according to the present invention has a P value defined by Equation 1 above of less than 8.7, so that the volume of the empty space inside the battery may be sufficiently secured to relieve the pressure by accommodating the gas generated during rapid charging, while sufficiently impregnating the electrolyte into the negative electrode to allow the lithium ions to move smoothly, and the characteristics of the negative electrode and the volume of the empty space inside the battery may be optimized according to the shape of the battery case by the form factor.

Therefore, if the P value defined by Equation 1 above is less than 8.7, the electrolyte localization and lithium plating phenomenon due to the gas generated during rapid charging may be improved, so that the rapid charging life characteristics and safety may be improved.

In addition, if the P value defined by Equation 1 above is 7.4 to 8.6, the life characteristics and safety during rapid charging may be improved, while at the same time the initial resistance characteristics and capacity characteristics may be excellent. This may occur if the amount of lithium ions that may be accommodated in the negative electrode decreases or the amount of electrolyte through which lithium ions may move decreases, when the negative electrode loading amount or the negative electrode thickness excessively decreases or when the negative electrode porosity or the volume of empty space inside the battery excessively increases.

The volume $V_c$ of the empty space inside the lithium secondary battery may be 17.5 cm$^3$ to 25 cm$^3$, 18 cm$^3$ to 23 cm$^3$, 18.5 cm$^3$ to 21.5 cm$^3$, or 19.7 cm$^3$ to 20.5 cm$^3$. If the volume $V_c$ of the empty space inside the lithium secondary battery satisfies the range, a pressure caused by the gas generated during rapid charging may be reduced, thereby suppressing the electrolyte localization phenomenon, and thus improving lithium plating phenomenon and rapid charge life characteristics.

The ratio ($V_c/V$) of the total volume ($V$) of the space inside the battery case to the volume of the empty space ($V_c$) inside the lithium secondary battery may be 0.08 to 0.25, preferably 0.1 to 0.22, more preferably 0.11 to 0.20, 0.13 to 0.18, or 0.15 to 0.17. If the volume ratio of the empty space inside the lithium secondary battery satisfies the range, a pressure due to the gas generation may be alleviated, thereby improving rapid charging characteristics.

The diameter R of the lithium secondary battery may be 40 mm or more, 42 mm or more, or 46 mm or more, and the height H of the lithium secondary battery may be 70 mm or more, 75 mm or more, or 80 mm or more. If the ranges are satisfied, excellent capacity characteristics may be achieved. The diameter of the lithium secondary battery means the diameter of the external shape of the lithium secondary battery, and may be the same as the diameter of the outside of the battery case. The height of the lithium secondary battery means the height of the external shape of the lithium secondary battery, and may be the same as the height of the outside of the battery case.

The ratio (R/H, form factor ratio) of the height H of the lithium secondary battery to the diameter R of the lithium secondary battery may be 0.4 or more, 0.4 to 0.6, or 0.5 to 0.6. If the range of the form factor ratio is satisfied, high capacity characteristics may be achieved as a large cylindrical lithium secondary battery.

The negative electrode loading amount $L_a$ may be 0.25 g/25 cm$^2$ to 0.45 g/25 cm$^2$, 0.3 g/25 cm$^2$ to 0.4 g/25 cm$^2$, 0.32 g/25 cm$^2$ to 0.38 g/25 cm$^2$, or 0.33 g/25 cm$^2$ to 0.37 g/25 cm$^2$. If the range of the negative electrode loading amount is satisfied, capacity characteristics and life characteristic may be improved.

The negative electrode porosity $P_a$ may be 23.5% or more, 23.5% to 27.0%, 24.0 to 26.5%, or 25.0% to 26.0%. If the negative electrode porosity range is satisfied, energy density, capacity characteristics, and electrolyte impregnation properties may be improved simultaneously.

The negative electrode thickness $t_a$ may be 180 $\mu$m to 200 $\mu$m, 185 $\mu$m to 195 $\mu$m, or 189 $\mu$m to 192 $\mu$m. If the negative electrode thickness range is satisfied, the capacity characteristics and life characteristics may be improved simultaneously.

Next, each component of the cylindrical lithium secondary battery according to the present invention will be described in more detail.

The cylindrical lithium secondary battery according to the present invention includes: an electrode assembly including a positive electrode, a negative electrode, and a separator interposed between the positive electrode and the negative electrode; an electrolyte; and a battery case in which the electrode assembly and the electrolyte are accommodated.

**(1) Electrode Assembly**

The electrode assembly according to the present invention includes a positive electrode, a negative electrode, and a separator interposed between the positive electrode and the negative electrode.

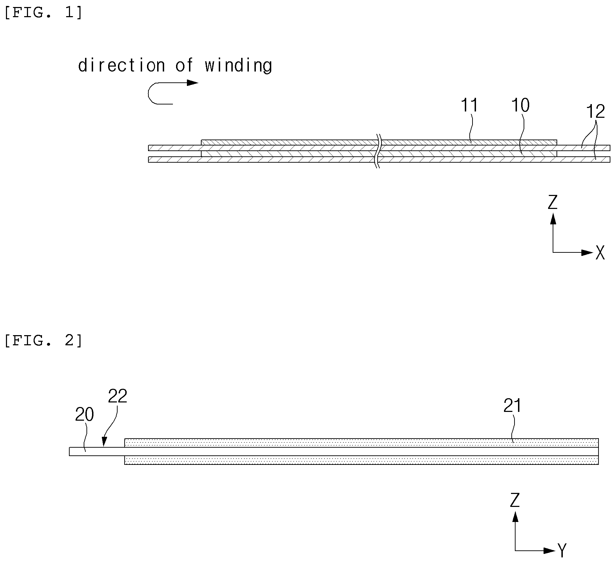

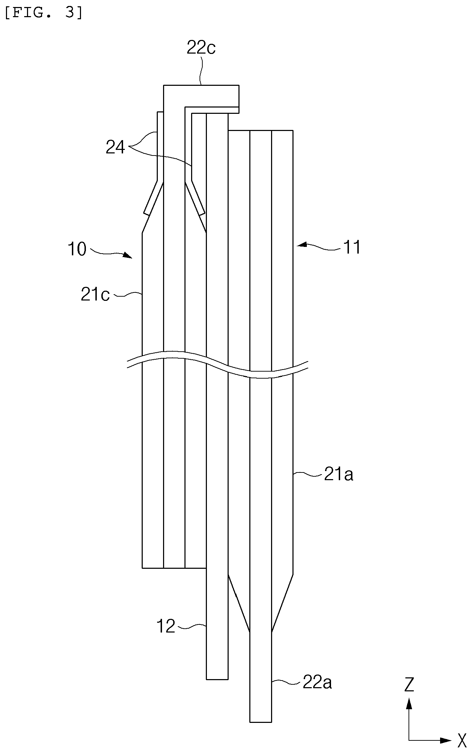

FIG. 1 illustrates a laminate structure of an electrode assembly before winding, according to an embodiment of the present invention, FIG. 2 illustrates a cross-sectional structure of an electrode plate (positive electrode or negative electrode) according to an embodiment of the present invention, and FIG. 3 illustrates a structure of an electrode assembly according to an embodiment of the present invention.

Referring to FIGS. 1 and 2, the electrode assembly (A) of the present invention may be manufactured by winding a laminate formed by sequentially laminating a separator (12), a positive electrode (10), a separator (12), and a negative electrode (11) at least once in one direction (X).

Hereinafter, each constituent element of the electrode assembly of the present invention will be described in detail.

## 1) Positive Electrode

The positive electrode may be manufactured by applying a positive electrode slurry to one side or both sides of a sheet-shaped positive electrode current collector, removing the solvent of the positive electrode slurry through a drying process, and then rolling. Meanwhile, a positive electrode including a non-coated part may be manufactured by not applying the positive electrode slurry to a portion of the positive electrode collector, for example, one end of the positive electrode collector when applying the positive electrode slurry.

In addition, the positive electrode slurry may be prepared by dispersing the positive electrode material according to the present invention in a solvent such as dimethyl sulfoxide (DMSO), isopropyl alcohol, N-methylpyrrolidone (NMP), acetone, and water.

The positive electrode manufactured thereby includes a positive electrode current collector and a positive electrode active material layer, and the positive electrode active material layer may include a positive electrode material.

Various positive electrode current collectors used in the relevant technical field may be used as the positive electrode current collector. For example, as the positive electrode current collector, stainless steel, aluminum, nickel, titanium, calcined carbon, or aluminum or stainless steel, surface-treated with carbon, nickel, titanium, silver, or the like may be used. The positive electrode current collector may typically have a thickness of 3 to 500 $\mu$m, and may form fine irregularities on the surface of the positive electrode current collector to increase the adhesive strength of the positive electrode active material. The positive electrode current collector may be used in various forms such as a film, a sheet, a foil, a net, a porous body, a foam and a non-woven fabric.

The positive electrode active material layer may be positioned on the positive electrode current collector, and specifically, may be positioned on one side or both sides of the positive electrode current collector. The positive electrode active material layer may have a single layer or a multilayer structure of two or more layers.

The positive electrode active material may use positive electrode active materials generally used in the relevant technical field, and the type thereof is not particularly limited. The positive electrode active material is a compound capable of reversible intercalation and deintercalation of lithium, and specifically, may include a lithium-transition metal composite oxide including lithium and at least one transition metal composed of nickel, cobalt, manganese, and aluminum, preferably a lithium-transition metal composite oxide including lithium and a transition metal including nickel, cobalt, and manganese.

More specifically, the lithium transition metal composite oxide includes lithium-manganese-based oxides (for example, $LiMnO_2$, $LiMn_2O_4$, or the like), lithium-cobalt-based oxides (for example, $LiCoO_2$, or the like), lithium-nickel-based oxides (for example, $LiNiO_2$, or the like), lithium-nickel-manganese-based oxides (for example, $LiNi_{1-Y}Mn_YO_2$ (where, 0<Y<1), $LiMn_{2-Z}Ni_ZO_4$ (where, 0<Z<2), or the like), lithium-nickel-cobalt-based oxides (for example, $LiNi_{1-Y1}Co_{Y1}O_2$ (where, 0<Y1<1), or the like), lithium-manganese-cobalt-based oxides (for example, $LiCo_{1-Y2}Mn_{Y2}O_2$ (where, 0<Y2<1), $LiMn_{2-z1}Co_{z1}O_4$ (where, 0<Z1<2), or the like), lithium-nickel-manganese-cobalt-based oxides (for example, $Li(Ni_pCo_qMn_{r1})O_2$ (where, 0<p<1, 0<q<1, 0<r1<1, and p+q+r1=1) or $Li(Ni_{p1}Co_{q1}Mn_{r2})O_4$ (where, 0<p1<2, 0 <q1<2, 0<r2<2, and p1+q1+r2=2), or the like), or lithium-nickel-cobalt-transition metal (M) oxides (for example, $Li(Ni_{p2}Co_{q2}Mn_{r3}M_{S2})O_2$ (where, M is selected from the group consisting of Al, Fe, V, Cr, Ti, Ta, Mg and Mo, and p2, q2, r3 and s2 are atomic fractions of independent elements, 0<p2<1, 0<q2<1, 0<r3<1, 0<s2<1, and p2+q2+r3+s2=1), or the like), and one or two or more compounds among them may be included. Among them, in terms of being able to improve the capacity characteristics and stability of the battery, the lithium transition metal composite oxide may be $LiCoO_2$, $LiMnO_2$, $LiNiO_2$, lithium nickel-manganese-cobalt oxides (for example, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, or the like), or lithium nickel-cobalt-aluminum oxides (for example, $Li(Ni_{0.8}Co_{0.15}Al_{0.05})O_2$, or the like), and considering the prominence of the improvement effect according to the control of the type and content ratio of the constituent elements forming the lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, and any one thereof, or a mixture of two or more thereof may be used.

Meanwhile, the positive electrode active material layer may optionally further include at least one of a positive electrode conductive material and a positive electrode binder.

The positive electrode conductive material is used to provide the electrode with conductivity, and in the battery to be formed, if it does not cause a chemical change and has electronic conductivity, it may be used without specific limitations. Specific examples include: graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber of copper, nickel, aluminum, and silver; conductive whiskers of zinc oxide and potassium titanate; conductive metal oxides such as titanium oxide; or conductive polymers such as polyphenylene derivatives, and one of them may be used alone or a mixture of two or more may be used. The positive electrode conductive material may be typically included in 1 to 30 wt%, preferably 1 to 20 wt%, and more preferably 1 to 10 wt%, based on the total weight of the positive electrode active material layer.

The positive electrode binder serves to improve the adhesion between positive electrode particles and the adhesive strength between the positive electrode and the positive electrode current collector, and specific examples thereof include a fluorine resin-based binder including polyvinylidene fluoride (PVDF) or polytetrafluoroethylene (PTFE); a rubberbased binder including styrene butadiene rubber (SBR), acrylonitrile-butadiene rubber, and styrene-isoprene rubber; a cellulose-based binder including carboxyl methyl cellulose (CMC), starch, hydroxy propyl cellulose, and regenerated cellulose; a polyalcohol-based binder including polyvinyl alcohol; a polyolefin-based binder including polyethylene and polypropylene; a polyimide-based binder; and a polyester-based binder, and a silane-based binder, and one of them may be used alone or a mixture of two or more may be used. The positive electrode binder may be included in an amount of 1 to 30 wt%, preferably 1 to 20 wt%, and more preferably 1 to 10 wt%, based on the total weight of the positive electrode active material layer.

## 2) Negative electrode

The negative electrode may be manufactured by applying a negative electrode slurry to one side or both sides of a sheet-shaped negative electrode current collector, removing the solvent of the negative electrode slurry through a drying process, and then rolling. Meanwhile, a negative electrode including a non-coated part may be manufactured by not applying the negative electrode slurry to a portion of the negative electrode current collector, for example, one end of the negative electrode current collector, when applying the negative electrode slurry.

The negative electrode slurry may be prepared by dispersing the negative electrode active material in a solvent such as distilled water, ethanol, methanol, and isopropyl alcohol.

Alternatively, the negative electrode may be manufactured by casting the negative electrode slurry on a separate support, and then laminating the film obtained by peeling it off from the support onto the negative electrode current collector.

The negative electrode thus manufactured may include a negative electrode current collector and a negative electrode active material layer, and the negative electrode active material layer may include a negative electrode active material.

The negative electrode current collector is not particularly limited as long as it has high conductivity without causing chemical changes in the battery, and for example, copper, stainless steel, aluminum, nickel, titanium, calcined carbon, copper or stainless steel, surface-treated with carbon, nickel, titanium, silver, or the like, aluminumcadmium alloy, or the like may be used. The negative electrode current collector may typically have a thickness of 3 to 500 $\mu$m.

In addition, the negative electrode current collector, like the positive electrode current collector, may form fine unevenness on the surface of the current collector to strengthen the bonding force of the negative electrode active material. For example, it can be used in various forms such as a film, a sheet, a foil, a net, a porous body, a foam, and a non-woven fabric.

The negative active material layer may be positioned on the negative electrode current collector, and specifically, may be positioned on one side or both sides of the negative electrode current collector. The negative active material layer may have a single layer or a multilayer structure of two or more layers.

The thickness of the negative active material layer may be 180 $\mu$m to 200 $\mu$m, preferably 180 $\mu$m to 190 $\mu$m, more preferably 184 $\mu$m to 190 $\mu$m. If the range is satisfied, capacity characteristics and life characteristics may be improved.

The negative electrode active material may include a carbon-based active material. For example, the carbon-based active material may be one or more selected from the group consisting of amorphous, plate-like, flaky, spherical or fibrous natural graphite or artificial graphite, Kish graphite, pyrolytic carbon, mesophase pitch-based carbon fiber, mesocarbon microbeads, mesophase pitches and petroleum or coal tar pitch derived cokes.

Preferably, the negative electrode active material may include one or more selected from the group consisting of natural graphite and artificial graphite. If the negative electrode active material is included, capacity characteristics and life characteristics may be improved.

The negative electrode active material may be included in an amount of 90 wt% to 99 wt%, preferably 93 wt% to 99 wt%, and more preferably 96 wt% to 99 wt% based on the total weight of the negative electrode active material layer.

Meanwhile, the negative electrode active material layer may optionally further include a negative electrode conductive material and a negative electrode binder in addition to the negative electrode active material.

The negative electrode conductive material is used to provide the electrode with conductivity, and in the battery to be formed, if it does not cause a chemical change and has electronic conductivity, it may be used without specific limitations. Specific examples include graphite such as natural graphite and artificial graphite; carbon-based material such as carbon black, acetylene black, Ketjen black, channel black, furnace black, lamp black, thermal black, carbon fiber, carbon nanotube, or the like; metal powder or metal fiber of copper, nickel, aluminum, silver, or the like; conductive whiskers of zinc oxide, potassium titanate, or the like; conductive metal oxides such as titanium oxide; or conductive polymers such as polyphenylene derivatives, and one of them may be used alone or a mixture of two or more may be used. The negative electrode conductive material may be included in an amount of typically 1 to 30 wt%, preferably 1 to 20 wt%, and more preferably 1 to 10 wt%, based on the total weight of the negative electrode active material layer.

The negative electrode binder serves to improve the adhesion between negative electrode active material particles and the adhesive strength between the negative electrode active material and the negative electrode current collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, or various copolymers thereof, and one of them may be used alone or a mixture of two or more thereof may be used. The negative electrode binder may be included in an amount of 1 to 30 wt%, preferably 1 to 20 wt%, and more preferably 1 to 10 wt%, based on the total weight of the negative electrode active material layer.

Since the thickness, porosity and loading amount of the negative electrode are the same as described above, a detailed description will be omitted.

### 3) Separator

The separator is interposed between the positive electrode and the negative electrode, and used to separate the negative electrode and the positive electrode and to provide a passage for lithium ions, and may be used without specific limitations if it is a separator commonly used in lithium secondary batteries. Specifically, the separator may be a porous polymer film, for example, a porous polymer film made of a polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, the conventional porous nonwoven fabric, for example, a nonwoven fabric made of high-melting-point glass fibers, polyethylene terephthalate fibers, or the like may be used. In addition, a coated separator containing a ceramic component or a polymer material may be used to secure heat resistance or mechanical strength.

Meanwhile, the positive electrode (10) and the negative electrode (11) have a structure in which an active material layer (21) is formed on a sheet-shaped current collector (20), and may include a non-coated part (22) in which an active material layer (21) is not formed in a partial area of the current collector (20).

By using the positive electrode (10) and the negative electrode (11) including the non-coated part (22) as described above, a battery having a structure in which at least a portion of the non-coated part of the positive electrode (10) and the negative electrode (11) defines an electrode tab may be achieved without providing a separate electrode tab.

Specifically, the non-coated part (22) may be formed lengthwise along the winding direction (X) at one end of the current collector (20), and by combining a current collector plate to each of the positive electrode non-coated part and the negative electrode non-coated part, and by connecting the current collector plate to an electrode terminal, the non-coated part may function as an electrode tab.

For example, a battery in which the positive electrode non-coated part and the negative electrode non-coated part function as electrode tabs may be manufactured by the method below. First, a separator, a positive electrode, a separator, and a negative electrode are sequentially laminated so that the positive electrode non-coated part and the negative electrode non-coated part are positioned in opposite directions, and then wound in one direction to manufacture a jelly-roll type electrode assembly. Then, the non-coated parts of the positive and negative electrodes are bended toward the winding center (C), and then current collector plates are welded to the positive electrode non-coated part and the negative electrode non-coated part, respectively, and the current collector plates are connected to the electrode terminals to manufacture a battery. The current collector plate has a large cross-sectional area compared to a striptype electrode tab, and since the resistance is inversely proportional to the cross-sectional area of the passage through which the current flows, if the secondary battery is formed with the above-mentioned structure, cell resistance may be significantly reduced.

Meanwhile, the positive and negative electrode non-coated parts may be processed into a plurality of independently bendable segments, and at least some of the plurality of segments may be bended toward the winding center (C) of the electrode assembly.

The segments may be formed by processing the current collectors of the positive and negative electrodes through a metal foil cutting process such as laser notching, ultrasonic cutting, and punching.

If the non-coated parts of the positive and negative electrodes are processed into a plurality of segments, the stress applied to the non-coated part during bending may be reduced, thereby preventing deformation or damage to the non-coated part, and the welding characteristics with the current collector plate may be improved.

The current collector plate and the non-coated part are generally joined by welding, and in order to improve the welding characteristics, a strong pressure is required to be applied to the welding area of the non-coated part to bend the non-coated part as flat as possible. However, during the bending process, the shape of the non-coated part may be nonuniformly distorted and deformed, and the deformed portion may contact an electrode of the opposite polarity, causing an internal short circuit or causing microscopic cracks in the non-coated part. However, if the non-coated parts of the positive and negative electrodes are processed into a plurality of independently bendable segments, the stress applied to the non-coated part during bending may be alleviated, thereby minimizing deformation and damage to the non-coated part.

In addition, if the non-coated part is processed into a segmented form as described above, overlap occurs between the plurality of segments during bending, which increases the welding strength with the current collector plate, and if using the latest technology such as laser welding, the problem of the laser penetrating into the electrode assembly and melting the separator or active material may be prevented. Preferably, at least some of the bended plurality of segments may overlap on the upper and lower sides of the electrode assembly, and the current collector plate may be bonded on the overlapped plurality of segments.

Meanwhile, the electrode assembly according to the present invention may be formed with a structure in which an insulating layer (24) is additionally formed on the positive electrode (10), as illustrated in FIG. 3. Specifically, the insulating layer (24) may be formed to cover a portion of the positive electrode active material layer and a portion of the non-coated part along a direction parallel to the winding direction of the electrode assembly.

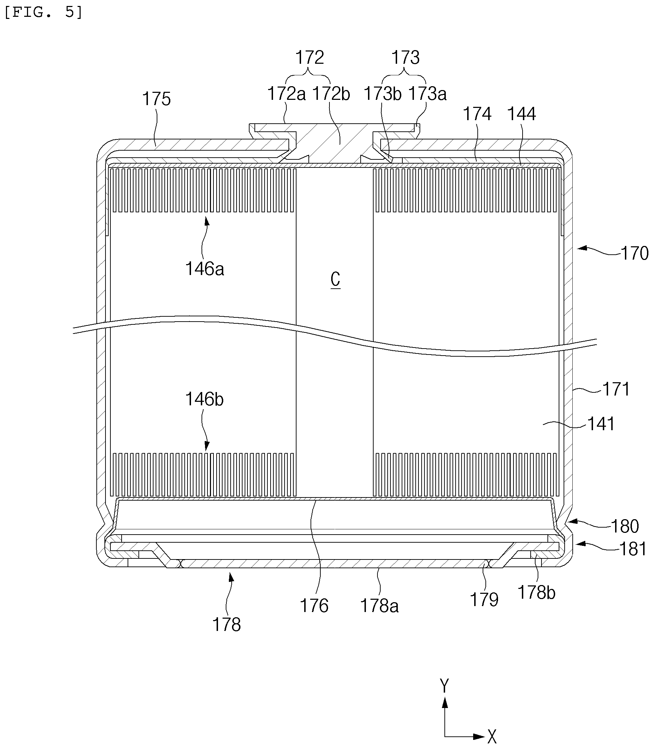

In the case of a battery having a tab-less structure in which the non-coated part (22c) of the positive electrode (10) and the non-coated part (22a) of the negative electrode (11) are used as electrode tabs, the electrode assembly is formed so that the positive electrode (10) protrudes above the separator (12) and the negative electrode (11) protrudes below the separator (12), and the protruding positive electrode (10) and/or negative electrode (11) are bended and then combined with current collector plates. However, if the positive electrode (10) or negative electrode (11) is bended as described above, the current collector of the positive electrode (10) or negative electrode (11) is positioned close to the electrode of the opposite polarity beyond the separator, which may cause electrical contact between the positive electrode and the negative electrode, thereby causing an internal short circuit. However, as illustrated in FIG. 5, if an insulating layer (24) covering a portion of the positive electrode active material layer and the non-coated part is formed, the positive electrode (10) and negative electrode (11) may be prevented from electrically contacting each other by the insulating layer (24), thereby preventing a short circuit from occurring inside the battery.

Preferably, the insulating layer (24) may be provided on at least one surface of the current collector of the positive electrode (10), and preferably, may be provided on both surfaces of the positive electrode (10).

In addition, the insulating layer (24) may be formed in an area of the positive electrode (10) that is likely to face the active material layer (21a) of the negative electrode (11). For example, on the surface of the non-coated part (22c) of the positive electrode (10), that faces the negative electrode (11) after being bended, an insulating layer (24) may be formed to extend to the end of the non-coated part (22c). However, in the case of the surface opposite to the surface facing the negative electrode (11) after being bended, it is preferable that the insulating layer (24) is formed only on a portion of the non-coated part (22c), for example, up to the point of bending of the non-coated part (22c). This is because if the insulating layer (24) is formed on the entire area of the non-coated part on the surface opposite to the surface facing the negative electrode (11), electrical contact with the current collector plate is impossible, and thus the non-coated part may not function as an electrode tab.

Meanwhile, the material or component of the insulating layer (24) is not particularly limited as long as it may be attached to the positive electrode while securing insulating performance. For example, the insulating layer may be an insulating coating layer or an insulating tape, and the insulating coating layer may include an organic binder and inorganic particles. In this case, the organic binder may be, for example, styrene-butadiene rubber (SBR), and the inorganic particles may be, but are not limited to, alumina oxide.

### (2) Battery Case

The battery case is for accommodating the electrode assembly and electrolyte, and may be a cylindrical battery case.

The form factor ratio of the cylindrical lithium secondary battery according to the present invention (defined as the value obtained by dividing the diameter of the cylindrical battery by the height, that is, the ratio of the diameter (R) to the height (H)) is the same as described above, so a detailed description will be omitted.

The cylindrical lithium secondary battery according to the present invention may be, for example, a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), a 4680 cell (diameter 46 mm, height 80 mm, form factor ratio 0.575), a 4695 cell (diameter 46 mm, height 95 mm, form factor ratio 0.484). In the figures representing the form factor, the first two numbers represent the diameter (R) of the lithium secondary battery, and the next two or three numbers represent the height (H) of the lithium secondary battery.

**(3) Electrolyte**

The electrolyte according to the present invention includes a lithium salt and an organic solvent.

The lithium salt may be used without specific limitations if it is a compound capable of providing lithium ions used in a lithium secondary battery. Specifically, the lithium salt may include one or more selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$, preferably $LiPF_6$. The concentration of the lithium salt may be 1.0 to 1.5 M, preferably, 1.0 to 1.4 M, more preferably, 1.0 to 1.3 M, further more preferably, 1.15 to 1.3 M. If the concentration of the lithium salt is within the range, the electrolyte may have appropriate conductivity and viscosity, thereby exhibiting excellent electrolyte performance, and lithium ions may effectively move.

The organic solvent may include one or more selected from the group consisting of a cyclic carbonate-based organic solvent, a linear carbonate-based organic solvent, a linear ester-based organic solvent, and a cyclic ester-based organic solvent.

The cyclic carbonate-based organic solvent is a highviscosity organic solvent, and may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent is an organic solvent having low viscosity and low dielectric constant, and may typically include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and may specifically include ethyl methyl carbonate (EMC).

The linear ester-based organic solvent may be, as a specific example, at least one organic solvent selected from the group consisting of methyl acetate, ethyl acetate, propyl acetate, methyl propionate, ethyl propionate, propyl propionate, and butyl propionate.

The cyclic ester-based organic solvent may be, as a specific example, at least one organic solvent selected from the group consisting of γ-butyrolactone, γ-valerolactone, γ-caprolactone, σ-valerolactone, and ε-caprolactone.

Preferably, the electrolyte according to the present invention may include ethylene carbonate and dimethyl carbonate as the organic solvent.

Meanwhile, the electrolyte may additionally include other additives in addition to the electrolyte components for the purpose of improving the life characteristics of the battery, suppressing the decrease in battery capacity, improving the discharge capacity of the battery, or the like.

The other additives may include at least one other additive selected from the group consisting of cyclic carbonate-based compounds, halogen-substituted carbonate-based compounds, sultone-based compounds, sulfate-based compounds, borate-based compounds, nitrile-based compounds, benzene-based compounds, amine-based compounds, silane-based compounds, and lithium salt-based compounds different from the lithium salt included in the electrolyte, as representative examples.

Specifically, the other additives include one or two or more compounds selected from the group consisting of vinylene carbonate (VC), vinyl ethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (ESA), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl)imide, LiFSI), $LiN(SO_2CF_3)_2$ (lithium bis(trifluoromethane sulfonyl)imide, LiTFSI), $LiPO_2F_2$, LiODFB, LiBOB (lithium bisoxalatoborate ($LiB(C_2O_4)_2$) and $LiBF_4$).

The other additives may be included in an amount of 0.01 to 20 wt% based on the total weight of the electrolyte, preferably 0.05 to 5.0 wt%. If the content of the above other additives is less than 0.01 wt%, the effects of improving the low-temperature output of the battery and the high-temperature storage characteristics and high-temperature life characteristics may be insignificant, and if the content of the other additives exceeds 20 wt%, there is a possibility that side reactions in the electrolyte may occur excessively during charging and discharging of the battery. In particular, if the additives for forming an SEI film are added in excessive amounts, the additives may not be sufficiently decomposed at high temperatures and may exist as unreacted substances or precipitated substances in the electrolyte at room temperature. Accordingly, side reactions that reduce the life or resistance characteristics of the secondary battery may occur.

Next, the structure of the lithium secondary battery according to the present invention will be described.

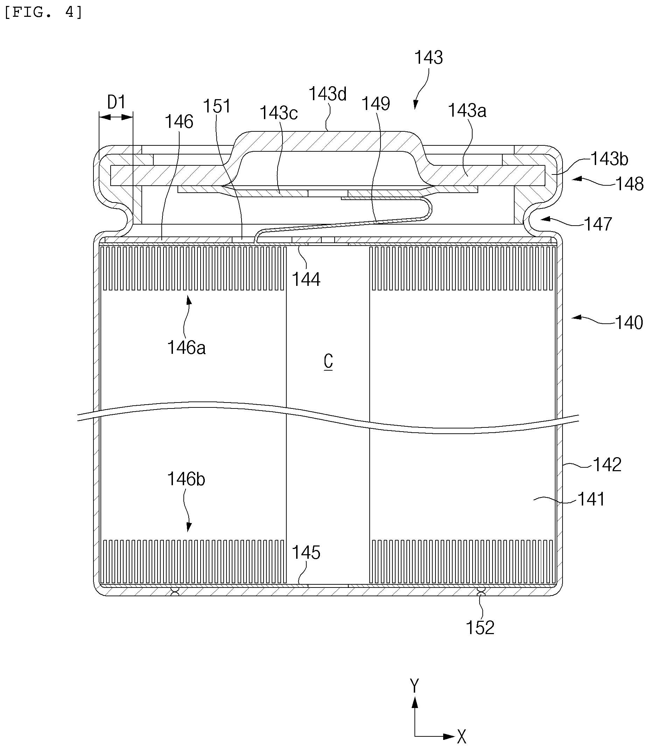

FIG. 4 and FIG. 5 disclose embodiment examples of the lithium secondary battery according to the present invention. Hereinafter, the lithium secondary battery according to the present invention will be described with reference to FIG. 4 and FIG. 5. However, FIG. 4 and FIG. 5 only show embodiments of the present invention, and the structure of the battery of the present invention is not limited to the scope disclosed in FIG. 4 and FIG. 5.

FIG. 4 shows a cross-sectional view of a lithium secondary battery with a tab-less structure according to an embodiment of the present invention.

Referring to FIG. 4, a lithium secondary battery (140) according to the present invention may include an electrode assembly (141), a battery case (142) in which the electrode assembly (141) and an electrolyte (not shown) are accommodated, and a sealant (143) that seals the open end of the battery case (142).

In this case, the electrode assembly may be a laminate of a positive electrode, a separator, and a negative electrode wound in one direction. In addition, the positive electrode and the negative electrode of the electrode assembly may each include a non-coated part in which an active material layer is not formed, and may be laminated and wound so that the positive electrode non-coated part and the negative electrode non-coated part are positioned at the top and bottom of the electrode assembly, respectively. Since the electrode assembly has been described above, only the remaining components except for the electrode assembly will be described below.

Meanwhile, the battery case (142) is a can-shaped container with an open end formed at the top, and is formed using a conductive metal material such as aluminum and steel. The battery case accommodates the electrode assembly (141) in the inner space through the upper open end, and also accommodates an electrolyte (not shown).

Meanwhile, it is preferable that the lithium secondary battery (140) of the present invention does not include a current interruption device (CID).

Meanwhile, as shown in FIG. 4, the battery case (142) is electrically connected to the non-coated part (146b) of the negative electrode, and may function as a negative electrode terminal that contacts an external power source and transmits current applied from the external power source to the negative electrode.

If necessary, a beading part (147) and a crimping part (148) may be provided at the top of the battery case (142). The beading part (147) may be formed by pressing the outer circumference of the battery case (142) to a distance of D1. The beading part (147) prevents the electrode assembly (141) accommodated inside the battery case (142) from coming out through the upper opening of the battery case (142), and may function as a support part on which the sealant (143) is secured.

The crimping part (148) may be formed on the upper portion of the beading part (147), and has an extended and bent shape to surround the outer circumference of a cap plate (143a) placed on the beading part (147) and a portion of the upper surface of the cap plate (143a).

Next, the sealant (143) is for sealing the open end of the battery case (142), and includes a cap plate (143a), a first gasket (143b) that provides airtightness between the cap plate (143a) and the battery case (142) and has insulation, and may further include a connection plate (143c) that is electrically and mechanically coupled to the cap plate (143a), if necessary. The cap plate (143a) is pressed onto the beading part (147) formed on the battery case (142), and may be fixed by the crimping part (148).

The cap plate (143a) is a component formed using a conductive metal material, and covers the upper opening of the battery case (142). The cap plate (143a) is electrically connected to the positive electrode of the electrode assembly (141), and is electrically insulated from the battery case (142) through the first gasket (143b). Therefore, the cap plate (143a) may function as a positive electrode terminal of a lithium secondary battery. The cap plate (143a) may have a protrusion part (143d) protruding upward from a center C, and the protrusion part (143d) may contact an external power source to allow current to be applied from the external power source.

A first gasket (143b) may be interposed between the cap plate (143a) and the crimping part (148) to secure the airtightness of the battery case (142) and to electrically insulate between the battery case (142) and the cap plate (143a) .

Meanwhile, the lithium secondary battery (140) according to the present invention may further include current collector plates (144, 145), if necessary. The current collector plates are coupled to the positive electrode non-coated part (146a) and the negative electrode non-coated part (146b), and are connected to the electrode terminals (for example, positive electrode terminal and negative electrode terminal) .

Specifically, the cylindrical battery (140) according to the present invention may include a first current collector plate (144) coupled to the upper portion of the electrode assembly (141) and a second current collector plate (145) coupled to the lower portion of the electrode assembly (141).

The first current collector plate (144) and/or the second current collector plate (145) may be further included.

The first current collector plate (144) is coupled to the upper portion of the electrode assembly (141). The first current collector plate (144) is formed using a conductive metal material such as aluminum, copper and nickel, and is electrically connected to the non-coated part (146a) of the positive electrode. A lead (149) may be connected to the first current collector plate (144). The lead (149) may extend upward from the electrode assembly (141) and be connected to the connection plate (143c) or may be directly connected to the lower surface of the cap plate (143a). The connection of the lead (149) to other components may be accomplished through welding. Preferably, the first current collector plate (144) may be formed integrally with the lead (149). In this case, the lead (149) may have a plate shape that extends outward from the center of the first current collector plate (144).

Meanwhile, the first current collector plate (144) is coupled to the end of the non-coated part (146a) of the positive electrode, and the coupling may be achieved by, for example, laser welding, resistance welding, ultrasonic welding, soldering or the like.

The second current collector plate (145) is coupled to the lower portion of the electrode assembly (141). The second current collector plate (145) is formed using a conductive metal material such as aluminum, copper, and nickel, and is electrically connected to the non-coated part (146b) of the negative electrode. One side of the second current collector plate (145) may be coupled to the non-coated part (146b) of the negative electrode, and the opposite side may be coupled to the inner bottom surface of the battery case (142). In this case, the coupling may be achieved by, for example, laser welding, resistance welding, ultrasonic welding, soldering or the like.

Meanwhile, the lithium secondary battery (140) according to the present invention may further include an insulator (146), if necessary. The insulator (146) may be disposed to cover the upper surface of the first current collector plate (144). Since the insulator (146) covers the first current collector plate (144), direct contact between the first current collector plate (144) and the inner surface of the battery case (142) may be prevented.

The insulator (146) has a lead hole (151) through which the lead (149) extending upward from the first current collector plate (144) may be drawn out. The lead (149) is drawn out upward through the lead hole (151) and coupled to the lower surface of the connection plate (143c) or the lower surface of the cap plate (143a).

The insulator (146) may be formed using a polymer resin having insulating properties, for example, a polymer resin material such as polyethylene, polypropylene, polyimide, and polybutylene terephthalate.

Meanwhile, the lithium secondary battery (140) according to the present invention may further include a venting part (152) formed on the lower surface of the battery case (142), if necessary. The venting part (152) corresponds to a region of the lower surface of the battery case (142) that has a thinner thickness compared to the surrounding region. Since the venting part (152) is thin, it is structurally weaker compared to the surrounding region. Therefore, if the pressure inside the lithium secondary battery (140) increases above a certain level, the venting part (152) may rupture, thereby allowing the gas inside the battery case (152) to be discharged to the outside, thereby preventing the battery from exploding.

FIG. 5 illustrates a cross-sectional view of a lithium secondary battery with a tab-less structure according to another embodiment of the present invention.

Referring to FIG. 5, a cylindrical lithium secondary battery (170) according to another embodiment of the present invention has a different structure of a battery case and a sealant compared to the lithium secondary battery (140) illustrated in FIG. 4, and the configuration of an electrode assembly and an electrolyte is substantially the same.

Specifically, a cylindrical lithium secondary battery (170) according to another embodiment of the present invention includes a battery case (171) in which a rivet terminal (172) is installed through the battery case. The rivet terminal (172) is installed in a partially closed closed surface (upper surface in the drawing) of one end of the battery case (171). The rivet terminal (172) is riveted to a through hole (first opening of the first end) of the battery case (171) while an insulating second gasket (173) is interposed therebetween. The rivet terminal (172) is exposed to the outside in a direction opposite to the gravity direction.

The rivet terminal (172) includes a terminal exposure part (172a) and a terminal insertion part (172b). The terminal exposure part (172a) is exposed to the outside of the closed surface of the battery case (171). The terminal exposure part (172a) may be positioned approximately at the center of the partially closed surface of the battery case (171). The maximum diameter of the terminal exposure part (172a) may be formed larger than the maximum diameter of the through hole formed in the battery case (171). The terminal insertion part (172b) may penetrate approximately at the center of the closed surface of the battery case (171) and be electrically connected to the non-coated part (146a) of the positive electrode. The terminal insertion part (172b) may be riveted onto the inner surface of the battery case (171). That is, an end of the terminal insertion part (172b) may have a shape that is bent toward the inner surface of the battery case (171). The maximum diameter of the end of the terminal insertion part (172b) may be larger than the maximum diameter of the through hole of the battery case (171).

The lower surface of the terminal insertion part (172b) may be welded to the first current collector plate (144) connected to the non-coated part (146a) of the positive electrode. An insulation cap (174) formed using an insulating material may be interposed between the first current collector plate (144) and the inner surface of the battery case (171). The insulation cap (174) covers the upper portion of the first current collector plate (144) and the upper edge portion of the electrode assembly (141). As a result, the outer non-coated part (B3) of the electrode assembly (141) may be prevented from coming into contact with the inner surface of the battery case (171) having a different polarity to cause a short circuit. The terminal insertion part (172b) of the rivet terminal (172) may be welded to the first current collector plate (144) by penetrating the insulation cap (174).

The second gasket (173) is interposed between the battery case (171) and the rivet terminal (172) to prevent the battery case (171) and the rivet terminal (172) having opposite polarities from electrically contacting each other. As a result, the upper surface of the battery case (171) having a substantially flat shape may function as a positive electrode terminal of the cylindrical lithium secondary battery (170).

The second gasket (173) includes a gasket exposure part (173a) and a gasket insertion part (173b). The gasket exposure part (173a) is interposed between the terminal exposure part (172a) of the rivet terminal (172) and the battery case (171). The gasket insertion part (173b) is interposed between the terminal insertion part (172b) of the rivet terminal (172) and the battery case (171). The gasket insertion part (173b) may be deformed together with the terminal insertion part (172b) during riveting and may be closely attached to the inner surface of the battery case (171). The second gasket (173) may be formed using, for example, an insulating polymer resin.

The gasket exposure part (173a) of the second gasket (173) may have an extended shape to cover the outer surface of the terminal exposure part (172a) of the rivet terminal (172). If the second gasket (173) covers the outer surface of the rivet terminal (172), a short circuit may be prevented from occurring during the process of connecting electrical connection components such as a bus bar to the upper surface of the battery case (171) and/or the rivet terminal (172). Although not shown in the drawing, the gasket exposure part (173a) may have an extended form to cover not only the outer surface of the terminal exposure part (172a) but also a portion of the upper surface.

In the case where the second gasket (173) is formed using a polymer resin, the second gasket (173) may be joined to the battery case (171) and the rivet terminal (172) by heat fusion. In this case, the sealing at the joining interface between the second gasket (173) and the rivet terminal (172) and the joining interface between the second gasket (173) and the battery case (171) may be strengthened. Meanwhile, in the case where the gasket exposure part (173a) of the second gasket (173) has a form that extends to the upper surface of the terminal exposure part (172a), the rivet terminal (172) may be joined integrally with the second gasket (173) by insert injection.

The remaining area (175) of the upper surface of the battery case (171), excluding the area occupied by the rivet terminal (172) and the second gasket (173), corresponds to a negative electrode terminal having the opposite polarity to the rivet terminal (172).

The second current collector plate (176) is coupled to the lower portion of the electrode assembly (141). The second current collector plate (176) is formed using a conductive metal material such as aluminum, steel, copper, and nickel, and is electrically connected to the non-coated part (146b) of the negative electrode.

Preferably, the second current collector plate (176) is electrically connected to the battery case (171). To this end, at least a portion of the edge portion of the second current collector plate (176) may be interposed and fixed between the inner surface of the battery case (171) and the first gasket (178b). In an embodiment, at least a portion of the edge portion of the second current collector plate (176) may be supported by the lower surface of the bead part (180) formed at the lower end of the battery case (171) and fixed to the bead part (180) by welding. In a modification embodiment, at least a portion of the edge portion of the second current collector plate (176) may be directly welded to the inner wall surface of the battery case (171).

The second current collector plate (176) may have a plurality of protrusions (not shown) formed radially on a surface facing the non-coated part (146b). If the protrusions are formed, the second current collector plate (176) may be pressed to press the protrusions into the non-coated part (146b).

Preferably, the ends of the second current collector plate (176) and the non-coated part (146b) may be joined by welding, for example, laser welding.

A sealant (178) sealing the lower open end of the battery case (171) includes a cap plate (178a) and a first gasket (178b). The first gasket (178b) electrically separates the cap plate (178a) and the battery case (171). A crimping part (181) secures the edge of the cap plate (178a) and the first gasket (178b) together. The cap plate (178a) is provided with a vent part (179). The configuration of the vent part (179) is substantially the same as in the above-described embodiment.

Preferably, the cap plate (178a) is formed using a conductive metal material. However, since the first gasket (178b) is interposed between the cap plate (178a) and the battery case (171), the cap plate (178a) does not have electrical polarity. The sealant (178) seals the open end of the lower portion of the battery case (171) and discharges gas when the internal pressure of a battery cell (170) increases above a critical value.

Preferably, the rivet terminal (172) electrically connected to the non-coated part (146a) of the positive electrode is used as the positive electrode terminal. In addition, the part (175) of the upper surface of the battery case (171) electrically connected to the non-coated part (146b) of the negative electrode through the second current collector plate (176), excluding the rivet terminal (172), is used as the negative electrode terminal. In this way, if the two electrode terminals are positioned on the upper portion of the lithium secondary battery, it is possible to place electrical connection components such as bus bars on only one side of the cylindrical lithium secondary battery (170). This may lead to simplification of the battery pack structure and improvement of energy density. In addition, since the part (175) used as the negative electrode terminal has a substantially flat shape, a sufficient bonding area may be secured when bonding electrical connection components such as bus bars. Accordingly, the cylindrical lithium secondary battery (170) may lower the resistance at the joint portion of the electrical connection component to a desirable level.

If the lithium secondary battery is formed with the above tab-less structure, current concentration is less than that of the conventional battery having an electrode tab, so the heat generation inside the battery may be effectively reduced, and thus the effect of improving the thermal safety of the battery may be obtained.

**Battery Pack**

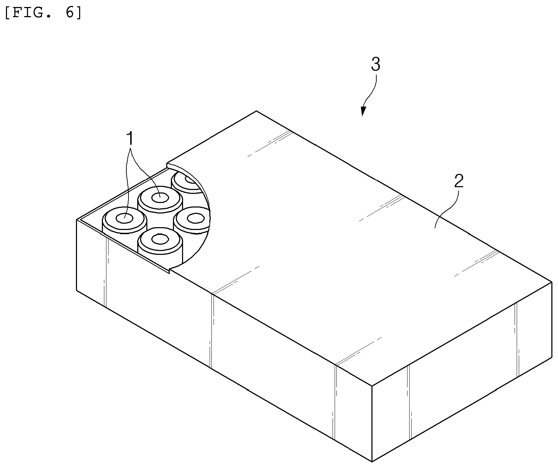

The cylindrical lithium secondary battery of the present invention as described above may be included as a unit cell in manufacturing a battery pack. FIG. 6 schematically illustrates the configuration of a battery pack according to an embodiment of the present invention. Referring to FIG. 6, a battery pack (3) according to an embodiment of the present invention includes an assembly of electrically connected lithium secondary batteries (1) and a pack housing (2) that accommodates the assembly. The lithium secondary battery (1) is the lithium secondary battery according to the embodiment described above. In the drawing, for the convenience of drawing, parts such as a bus bar, a cooling unit, and an external terminal for electrical connection of the lithium secondary batteries (1) are omitted.

The battery pack (3) may be mounted on a vehicle. The vehicle may be, for example, an electric vehicle, a hybrid vehicle, or a plug-in hybrid vehicle. The vehicle includes a four-wheeled vehicle or a two-wheeled vehicle.

Hereinafter, the present invention will be described in more particularly through specific examples.

**Example 1**

<Manufacture of Negative Electrode>

A negative electrode slurry was prepared by adding a negative electrode active material, a conductive material, and a binder to distilled water at a weight ratio of 98:0.2:1.8. In this case, graphite was used as the negative electrode active material, carbon nanotubes were used as the conductive material, and a cellulose-based binder was used as the binder.

The negative electrode slurry was applied on a copper current collector having a thickness of 8 $\mu$m and dried, and then roll pressed to manufacture a negative electrode including a negative electrode active material layer. In this case, the thickness of the negative electrode was 190 $\mu$m, the loading amount was 0.35 g/25 cm$^2$, and the porosity was 25.5%.

<Manufacture of Electrode Assembly>

A positive electrode slurry was prepared by adding a positive electrode active material, a conductive material, and a binder to N-methylpyrrolidone at a weight ratio of 98:0.5:1.5. In this case, lithium nickel cobalt manganese oxide was used as the positive electrode active material, carbon nanotubes were used as the conductive material, and PVDF was used as the binder.

The positive electrode slurry was applied on an aluminum current collector and dried, and then roll pressed to manufacture a positive electrode.

A separator was interposed between the positive and negative electrodes manufactured as above, and the separator/positive electrode/separator/negative electrode were laminated in that order, and then wound to manufacture a jelly-roll type electrode assembly.

<Preparation of Electrolyte>

LiPF$_6$ was added to a molar concentration of 1.25 M in a mixed organic solvent of ethylene carbonate (EC), dimethyl carbonate (DMC), and ethyl methyl carbonate (EMC) at a weight ratio of 2:7:1 to prepare an electrolyte.

<Manufacture of Lithium Secondary Battery>

After the electrode assembly was inserted into a cylindrical battery case with a total internal space volume of 122.93 cm$^3$, 25.7 mL of the prepared electrolyte was injected to manufacture a 4680 cell (diameter: 46 mm, height: 80 mm). In this case, the dead volume ($V_d$) of the manufactured lithium secondary battery was measured to be 16.7 cm$^3$, and the pore volume ($V_p$) was measured to be 26 cm$^3$.

**Example 2**

<Manufacture of Negative Electrode>

A negative electrode was manufactured in the same manner as in Example 1, except that the thickness of the negative electrode manufactured was 190 $\mu$m, the loading amount was 0.35 g/25 cm$^2$, and the porosity was 25.5%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 27.7 mL of the prepared electrolyte was injected to manufacture a 4680 cell (diameter: 46 mm, height: 80 mm). In this case, the dead volume ($V_d$) of the manufactured lithium secondary battery was measured to be 16.7 cm$^3$, and the pore volume ($V_p$) was measured to be 26 cm$^3$.

**Example 3**

<Manufacture of Negative Electrode>

A negative electrode was manufactured in the same manner as in Example 1, except that the thickness of the negative electrode manufactured was 188 $\mu$m, the loading amount was 0.35 g/25 cm$^2$, and the porosity was 25.9%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 25.8 mL of the prepared electrolyte was injected to manufacture a 4680 cell (diameter: 46 mm, height: 80 mm). In this case, the dead volume ($V_d$) of the manufactured lithium secondary battery was measured to be 16.7 cm$^3$, and the pore volume ($V_p$) was measured to be 26.2 cm$^3$.

**Example 4**

<Manufacture of Negative Electrode>

A negative electrode was manufactured in the same manner as in Example 1, except that the thickness of the negative electrode manufactured was 184 $\mu$m, the loading amount was 0.37 g/25 cm$^2$, and the porosity was 24.7%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 27.6 mL of the prepared electrolyte was injected to manufacture a 4680 cell (diameter: 46 mm, height: 80 mm). In this case, the dead volume ($V_d$) of the manufactured 4680 cell was measured to be 16.27 cm$^3$, and the pore volume ($V_p$) was measured to be 26.07 cm$^3$.

**Example 5**

<Manufacture of Negative Electrode>

A negative electrode was manufactured in the same manner as in Example 1, except that the thickness of the negative electrode manufactured was 184.1 $\mu$m, the loading amount was 0.37 g/25 cm$^2$, and the porosity was 24.0%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 26.2 mL of the prepared electrolyte was injected to manufacture a 4680 cell (diameter: 46 mm, height: 80 mm). In this case, the dead volume ($V_d$) of the manufactured 4680 cell was measured to be 16.27 cm$^3$, and the pore volume ($V_p$) was measured to be 25.17 cm$^3$.

**Comparative Example 1**

<Manufacture of Negative Electrode>

A negative electrode was manufactured in the same manner as in Example 1, except that the thickness of the negative electrode manufactured was 190 $\mu$m, the loading amount was 0.35 g/25 cm$^2$, and the porosity was 25.5%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 29 mL of the prepared electrolyte was injected to manufacture a 4680 cell (diameter: 46 mm, height: 80 mm). In this case, the dead volume ($V_d$) of the manufactured 4680 cell was measured to be 16.6 cm$^3$, and the pore volume ($V_p$) was measured to be 26.1 cm$^3$.

**Comparative Example 2**

<Manufacture of Negative Electrode>

A negative electrode was manufactured in the same manner as in Example 1, except that the thickness of the negative electrode manufactured was 188 $\mu$m, the loading amount was 0.36 g/25 cm$^2$, and the porosity was 25.0%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 29 mL of the prepared electrolyte was injected to manufacture a 4680 cell (diameter: 46 mm, height: 80 mm). In this case, the dead volume ($V_d$) of the manufactured 4680 cell was measured to be 16.4 cm$^3$, and the pore volume ($V_p$) was measured to be 25.6 cm$^3$.

**Comparative Example 3**

<Manufacture of Negative Electrode>

A negative electrode was manufactured in the same manner as in Example 1, except that the thickness of the negative electrode manufactured was 187 $\mu$m, the loading amount was 0.36 g/25 cm$^2$, and the porosity was 25.3%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 29 mL of the prepared electrolyte was injected to manufacture a 4680 cell (diameter: 46 mm, height: 80 mm). In this case, the dead volume ($V_d$) of the manufactured 4680 cell was measured to be 16.3 cm$^3$, and the pore volume ($V_p$) was measured to be 26.1 cm$^3$.

**Comparative Example 4**

<Manufacture of Negative Electrode>

A negative electrode was manufactured in the same manner as in Example 1, except that the thickness of the negative electrode manufactured was 190 $\mu$m, the loading amount was 0.35 g/25 cm$^2$, and the porosity was 25.0%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 30.6 mL of the prepared electrolyte was injected to manufacture a 4680 cell (diameter: 46 mm, height: 80 mm). In this case, the dead volume ($V_d$) of the manufactured 4680 cell was measured to be 16.5 cm$^3$, and the pore volume ($V_p$) was measured to be 25.6 cm$^3$.

**Comparative Example 5**

<Manufacture of Negative Electrode>

A negative electrode was manufactured in the same manner as in Example 1, except that the thickness of the negative electrode manufactured was 190 $\mu$m, the loading amount was 0.35 g/25 cm$^2$, and the porosity was 24.0%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case having a total internal space volume of 122.93 cm$^3$, 30.6 mL of the prepared electrolyte was injected to manufacture a 4680 cell (diameter: 46 mm, height: 80 mm). In this case, the dead volume ($V_d$) of the manufactured 4680 cell was measured to be 16 cm$^3$, and the pore volume ($V_p$) was measured to be 25.1 cm$^3$.

**Comparative Example 6**

<Manufacture of Negative Electrode>

A negative electrode was manufactured in the same manner as in Example 1, except that the thickness of the negative electrode manufactured was 190 $\mu$m, the loading amount was 0.0.33 g/25 cm$^2$, and the porosity was 24.6%.

<Manufacture of Electrode Assembly>

An electrode assembly was manufactured in the same manner as in Example 1, except that the negative electrode manufactured above was used.

<Preparation of Electrolyte>

An electrolyte was prepared in the same manner as in Example 1.

<Manufacture of Lithium Secondary Battery>

After the electrode assembly was inserted into a cylindrical battery case, the prepared electrolyte was injected to manufacture a 2170 cell (diameter: 21 mm, height: 70 mm).

**Experimental Example 1: Measurement of P Value**

The characteristics and the P values defined by Equation 1 below of the cylindrical lithium secondary batteries manufactured in Examples 1 to 5 and Comparative Examples 1 to 6, are shown in Table 1 below.

[Equation 1]

$$P = \frac{R}{H} \times \frac{t_a L_a}{v_c p_a} \times 100$$

In Equation 1, H (unit: mm) means the height of the lithium secondary battery, R (unit: mm) means the diameter of the lithium secondary battery, $t_a$ (unit: $\mu$m) means the thickness of the negative electrode, $L_a$ (unit: g/25 cm$^2$) means the negative electrode loading amount, $P_a$ (unit: %) means the negative electrode porosity, and $V_c$ (unit: cm$^3$) means the volume of the empty space inside the lithium secondary battery.

In this case, $V_c$ was calculated according to Equation B below after the cylindrical lithium secondary batteries manufactured in Examples 1 to 5 and Comparative Examples 1 to 6 were charged to a voltage of 4.2 V at 25°C and then discharged for activation.

Volume of empty space inside lithium secondary battery $V_c$ (cm$^3$) = $V_d + V_p - V_e$ [Equation B]

In Equation B, $V_d$ is the dead volume inside the battery case, $V_p$ is the pore volume, and $V_e$ is the electrolyte volume. The $V_d$, $V_p$, and $V_e$ were each measured by the methods below.

The dead volume $V_d$ inside the battery case is the volume of the cylindrical lithium secondary battery minus the volume occupied by the electrode assembly and the volume occupied by the battery case. The volume of the cylindrical lithium secondary battery was obtained by measuring the volume of the external shape of the cylindrical battery case applied in Examples 1 to 5 and Comparative Examples 1 to 6 in a sealed state.

The pore volume $V_p$ was measured by multiplying the volume of each of the positive electrode, negative electrode, and separator of Examples 1 to 5 and Comparative Examples 1 to 6 by respective porosities.

The electrolyte volume $V_e$ was calculated by dividing the weight of the electrolyte remaining in the lithium secondary battery by the density of the electrolyte. The weight of the electrolyte remaining in the lithium secondary battery may be measured by (1) measuring the weight ($M_L$) of each of the lithium secondary batteries manufactured in the Examples 1 to 5 and Comparative Examples 1 to 6 that performed activation, (2) disassembling the lithium secondary battery to remove the electrolyte present in the battery case, (3) immersing the battery case and the electrode assembly in a dimethyl carbonate solvent, to remove the electrolyte present in the battery case surface, the electrode assembly surface, and the internal pores, and then drying the battery case and the electrode assembly, and (4) measuring the weight ($M_C$) of the dried battery case and the weight ($M_A$) of the dried electrode assembly, and then substituting the measured $M_L$, $M_C$, and $M_A$ into Equation B-1 below.

Weight of electrolyte remaining in lithium secondary battery = $M_L - M_C - M_A$ [Equation B-1]

[Table 1]

|  | H [mm] | R [mm] | $t_a$ [μm] | $L_a$ [g/25 cm$^2$] | $P_a$ [%] | $V_c$ [cm$^3$] | P |
|---|---|---|---|---|---|---|---|
| Example 1 | 80 | 46 | 190 | 0.35 | 25.5 | 20.0 | 7.5 |
| Example 2 | 80 | 46 | 190 | 0.35 | 25.5 | 18.6 | 8.06 |
| Example 3 | 80 | 46 | 188 | 0.35 | 25.9 | 20 | 7.3 |
| Example 4 | 80 | 46 | 184 | 0.37 | 24.9 | 18.37 | 8.56 |
| Example 5 | 80 | 46 | 184.1 | 0.37 | 23.9 | 19.6 | 8.36 |
| Comparative Example 1 | 80 | 46 | 190 | 0.35 | 25.5 | 17.2 | 8.7 |
| Comparative Example 2 | 80 | 46 | 188 | 0.36 | 25.0 | 16.7 | 9.3 |
| Comparative Example 3 | 80 | 46 | 187 | 0.36 | 25.3 | 17.2 | 8.9 |
| Comparative Example 4 | 80 | 46 | 190 | 0.35 | 25.0 | 15.3 | 10.0 |
| Comparative Example 5 | 80 | 46 | 190 | 0.35 | 24.0 | 14.7 | 10.8 |
| Comparative Example 6 | 70 | 21 | 170 | 0.33 | 24.6 | 2.07 | 33.0 |

Referring to Table 1 above, it can be confirmed that the lithium secondary batteries manufactured in Examples 1 to 5 have P values of less than 8.7, but the lithium secondary batteries manufactured in Comparative Examples 1 to 6 have P values of 8.7 or more.

**Experimental Example 2: Evaluation of Whether Lithium Plating Occurs during Rapid Charging**

Each lithium secondary battery manufactured in Examples 1 to 5 and Comparative Examples 1 to 6 was charged in CC/CV mode at 40°C with a constant current (CC) of 1.0 C until 4.2 V (cut-off current 0.05 C), and then discharged in CC mode at a constant current (CC) of 1.0 C until 2.5 V. The charge and discharge process was considered as one cycle, and after repeating the charge and discharge cycles up to 100 times, the lithium secondary battery was disassembled, the electrode assembly was separated, and the occurrence of lithium plating on the surface of the negative electrode was visually confirmed. The results are shown in Table 2 below.

- O: Lithium plating occurred.
- X: Lithium plating does not occur.

[Table 2]

|  | Lithium plating occurrence |
|---|---|
| Example 1 | X |
| Example 2 | X |
| Example 3 | X |
| Example 4 | X |
| Example 5 | X |
| Comparative Example 1 | O |
| Comparative Example 2 | O |
| Comparative Example 3 | O |
| Comparative Example 4 | O |
| Comparative Example 5 | O |
| Comparative Example 6 | O |

Referring to Table 2 above, it can be confirmed that lithium plating does not occur in the lithium secondary batteries manufactured in Examples 1 to 5, but lithium plating occurs in the lithium secondary batteries manufactured in Comparative Examples 1 to 6. In particular, even in the case of the lithium secondary battery manufactured in Comparative Example 6, which has a smaller diameter and height than those of Examples 1 to 5 and Comparative Examples 1 to 5, it can be found that lithium plating occurs because the P value is 11.0 or more.

**Experimental Example 3: Rapid Charge Life Characteristics**

Each lithium secondary battery manufactured in Examples 1 to 5 and Comparative Examples 1 to 6 was charged in CC/CV mode at a constant current (CC) of 1.0 C at 40°C until 4.2 V (cut-off current 0.05 C), and then discharged in CC mode at a constant current (CC) of 1.0 C until 2.5 V. The charging and discharge process was considered as one cycle, and after repeating the charge and discharge cycles up to 100 times, a capacity retention ratio was measured. The results are shown in Table 3 below.

[Table 3]

|  | Capacity retention ratio [%] (@100 cycle) |
|---|---|
| Example 1 | 94.2 |
| Example 2 | 93.5 |
| Example 3 | 94.2 |
| Example 4 | 92.1 |
| Example 5 | 93.1 |
| Comparative Example 1 | 84.15 |
| Comparative Example 2 | 80.0 |
| Comparative Example 3 | 86.2 |
| Comparative Example 4 | 78.0 |
| Comparative Example 5 | 82.0 |

(continued)

|  | Capacity retention ratio [%] (@100 cycle) |
|---|---|
| Comparative Example 6 | 75 |

Referring to Table 3 above, it can be confirmed that the lithium secondary batteries manufactured in Examples 1 to 5 have higher capacity retention ratios at high temperatures than the lithium secondary batteries manufactured in Comparative Examples 1 to 6.

**Experimental Example 4: Evaluation of Initial Battery Characteristics**

(1) Evaluation of Initial Discharge Capacity

The initial discharge capacity of the lithium secondary batteries manufactured in Examples 1 to 5 and Comparative Examples 1 to 6 was measured.
Specifically, each cell was charged to 4.2 V at a constant current of 0.33 C at 40°C and discharged to 2.5 V at a power of 19.1 W to evaluate the initial discharge capacity. The measurement results are shown in Table 4 below.

(2) Evaluation of Initial Resistance

The initial resistance of the lithium secondary batteries manufactured in Examples 1 to 5 and Comparative Examples 1 to 6 was measured.
Specifically, each lithium secondary battery was charged to SOC 100% at 0.25 C constant current at 40°C, discharged for 10 seconds at 0.5 C constant current at SOC 50%, and then the initial resistance (DCIR) was calculated from the voltage drop that occurred at that time. The measurement results are shown in Table 4 below.

[Table 4]

|  | DCIR [mΩ] | Discharge capacity [Wh] |
|---|---|---|
| Example 1 | 4.05 | 97.7 |
| Example 2 | 3.82 | 97.8 |
| Example 3 | 4.25 | 97.5 |
| Example 4 | 3.9 | 97.7 |
| Example 5 | 4.1 | 97.8 |

Referring to Table 4 above, it can be confirmed that the lithium secondary batteries manufactured in Examples 1, 2, 4, and 5 have improved initial resistance and discharge capacity compared to the lithium secondary battery manufactured in Example 3. Through this, it can be understood that the lithium secondary battery having a P value of 7.4 to 8.6 is more preferable than the lithium secondary battery having a P value of less than 8.7, because rapid charge characteristics, initial resistance, and capacity characteristics are excellent at the same time.

[Description of Symbols]

1: Lithium secondary battery
2: Pack housing
3: Battery pack
10: Positive electrode
11: Negative electrode
12: Separator
20: Current collector
21: Active material layer
21a: Negative electrode active material layer
22: Non-coated part

22a: Non-coated part of negative electrode
22c: Non-coated part of positive electrode
24: Insulating layer
C: Winding center
140: Cylindrical lithium secondary battery
141: Electrode assembly
142: Battery case
143: Sealant
143a: Cap plate
143b: First gasket
143c: Connection plate
143d: Protrusion part
144: First current collector plate
145: Second current collector plate
146: Insulator
146a: Positive electrode non-coated part
146b: Negative electrode non-coated part
147: Beading part
148: Crimping part
149: Lead
151: Lead hole
152: Venting part
170: Cylindrical lithium secondary battery
171: Battery case
172: Rivet terminal
172a: Terminal exposure part
172b: Terminal insertion part
173: Second gasket
173a: Gasket exposure part
173b: Gasket insertion part
174: Insulation cap
176: Second current collector plate
178: Sealant
178a: Cap plate
178b: First gasket
179: Venting part
180: Beading part
181: Crimping part

## Claims

1. A cylindrical lithium secondary battery comprising:

   an electrode assembly comprising a positive electrode, a negative electrode, and a separator disposed between the positive electrode and the negative electrode; an electrolyte;
   and a battery case accommodating the electrode assembly and the electrolyte, wherein

   the electrolyte comprises a lithium salt and an organic solvent, and
   a P value defined by the following Equation 1 is less than 8.7:

   [Equation 1]

   $$P = \frac{R}{H} \times \frac{t_a L_a}{v_c p_a} \times 100$$

   in Equation 1,

H (unit: mm) means a height of the lithium secondary battery,
R (unit: mm) means a diameter of the lithium secondary battery,
$t_a$ (unit: $\mu$m) means a thickness of the negative electrode, $L_a$ (unit: g/25 cm$^2$) means a loading amount of the negative electrode,
$P_a$ (unit: %) means a porosity of the negative electrode, and
$V_c$ (unit: cm$^3$) means a volume of empty space inside the lithium secondary battery.

2. The cylindrical lithium secondary battery according to claim 1, wherein the P value represented by Equation 1 is 7.4 to 8.6.

3. The cylindrical lithium secondary battery according to claim 1, wherein $V_c$ is 17.5 cm$^3$ to 25 cm$^3$.

4. The cylindrical lithium secondary battery according to claim 1, wherein a ratio ($V_c$/V) of a volume ($V_c$) of the empty space inside the lithium secondary battery to a total volume (V) of inside space of the battery case is 0.08 to 0.25.

5. The cylindrical lithium secondary battery according to claim 1, wherein a ratio (R/H) of H to R is 0.4 or more.

6. The cylindrical lithium secondary battery according to claim 1, wherein $P_a$ is 23.5% or more.

7. The cylindrical lithium secondary battery according to claim 1, wherein $L_a$ is 0.25 g/25 cm$^2$ to 0.45 g/25 cm$^2$.

8. The cylindrical lithium secondary battery according to claim 1, wherein $t_a$ is 180 $\mu$m to 200 $\mu$m.

9. The cylindrical lithium secondary battery according to claim 1, wherein

the negative electrode comprises a negative electrode active material layer comprising a negative electrode active material, and
the negative electrode active material comprises a carbon-based active material.

10. The cylindrical lithium secondary battery according to claim 1, wherein

the negative electrode comprises a negative electrode active material layer comprising a negative electrode active material, and
the negative electrode active material is comprised in 90 wt% to 99 wt% based on the total weight of the negative electrode active material layer.

11. The cylindrical lithium secondary battery according to claim 1, wherein a concentration of the lithium salt is 1.0 M to 1.5 M.

12. The cylindrical lithium secondary battery according to claim 1, wherein the lithium salt comprises one or more selected from the group consisting of LiPF$_6$, LiClO$_4$, LiAsF$_6$, LiBF$_4$, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, and LiI.

13. The cylindrical lithium secondary battery according to claim 1, wherein the organic solvent comprises one or more selected from the group consisting of a cyclic carbonate-based organic solvent, a linear carbonate-based organic solvent, a linear ester-based organic solvent and a cyclic ester-based organic solvent.

14. The cylindrical lithium secondary battery according to claim 1, wherein the cyclic lithium secondary battery is a 46110 cell, 48110 cell, 4880 cell or 4680 cell.

15. The cylindrical lithium secondary battery according to claim 1, wherein the cylindrical lithium secondary battery comprises a non-coated part on which an active material layer is not formed on at least a portion of the positive electrode and the negative electrode, and the non-coated part of the positive electrode and the non-coated part of the negative electrode are defined as electrode tabs.

16. The cylindrical lithium secondary battery according to claim 15, wherein the positive electrode non-coated part and the negative electrode non-coated part are formed along a winding direction of the electrode assembly on one end of the positive electrode and negative electrode, respectively, a current collector plate is coupled to each of the positive electrode non-coated part and the negative electrode non-coated part, and the current collector plate is connected to an electrode terminal.

17. The cylindrical lithium secondary battery according to claim 15, wherein

the positive and negative electrode non-coated parts are processed into a plurality of independently bendable segments, and
at least some of the plurality of segments are bended toward a winding center of the electrode assembly.

18. The cylindrical lithium secondary battery according to claim 17, wherein at least some of the bended plurality of segments overlap on the upper and lower sides of the electrode assembly, and the current collector plate is coupled on the overlapped plurality of segments.

19. A battery pack comprising the cylindrical lithium secondary battery according to any one of claims 1 to 18 as a unit cell.

[FIG. 1]

direction of winding

11　10　12

Z
↑
→ X

[FIG. 2]

20　22　21

Z
↑
→ Y

[FIG. 3]

[FIG. 4]

EP 4 765 282 A1

[FIG. 5]

31

[FIG. 6]

## INTERNATIONAL SEARCH REPORT

| International application No. |
| --- |
| **PCT/KR2024/020835** |

| | |
| --- | --- |
| **A.** | **CLASSIFICATION OF SUBJECT MATTER** |

**H01M 10/052**(2010.01)i; **H01M 10/0569**(2010.01)i; **H01M 10/0568**(2010.01)i; **H01M 50/533**(2021.01)i;
**H01M 50/107**(2021.01)i; **H01M 50/538**(2021.01)i; **H01M 50/213**(2021.01)i; **H01M 4/587**(2010.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 10/052(2010.01); H01M 2/18(2006.01); H01M 4/58(2010.01); H01M 4/62(2006.01); H01M 50/107(2021.01);
H01M 50/152(2021.01); H01M 50/213(2021.01); H01M 50/451(2021.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 원통형 리튬 이차전지(cylindrical lithium secondary battery), 높이(height), 직경 (diameter), 음극(anode), 두께(thickness), 로딩량(loading amount), 공극률(porosity), 부피(volume)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | KR 10-2023-0070167 A (LG ENERGY SOLUTION, LTD.) 22 May 2023 (2023-05-22) See claims 6, 7 and 46; and paragraphs [0211], [0212], [0460]-[0462] and [0589]. | 1-19 |
| A | KR 10-2011-0063593 A (EVEREADY BATTERY COMPANY, INC.) 10 June 2011 (2011-06-10) See abstract; claims 1-20; and table 3. | 1-19 |
| A | KR 10-2023-0058295 A (LG ENERGY SOLUTION, LTD.) 03 May 2023 (2023-05-03) See abstract; claims 1-29; and paragraphs [0074], [0178] and [0258]. | 1-19 |
| A | KR 10-2023-0058304 A (LG ENERGY SOLUTION, LTD.) 03 May 2023 (2023-05-03) See abstract; and claims 1-29. | 1-19 |
| A | JP 2011-216436 A (HITACHI VEHICLE ENERGY LTD.) 27 October 2011 (2011-10-27) See abstract; and claims 1-6. | 1-19 |

| | |
| --- | --- |
| ☐ Further documents are listed in the continuation of Box C. | ☑ See patent family annex. |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 765 282 A1

## INTERNATIONAL SEARCH REPORT
### Information on patent family members

International application No.

**PCT/KR2024/020835**

| Patent document cited in search report | | | Publication date (day/month/year) | Patent family member(s) | | | Publication date (day/month/year) |
|---|---|---|---|---|---|---|---|
| KR | 10-2023-0070167 | A | 22 May 2023 | CN | 117981158 | A | 03 May 2024 |
| | | | | EP | 4391194 | A1 | 26 June 2024 |
| | | | | JP | 2024-543432 | A | 21 November 2024 |
| | | | | US | 2024-0396168 | A1 | 28 November 2024 |
| | | | | WO | 2023-085893 | A1 | 19 May 2023 |
| KR | 10-2011-0063593 | A | 10 June 2011 | CN | 100517808 | C | 22 July 2009 |
| | | | | CN | 100883065 | A | 20 December 2006 |
| | | | | EP | 1685612 | A2 | 02 August 2006 |
| | | | | EP | 1685612 | B1 | 26 October 2011 |
| | | | | EP | 1685612 | B2 | 08 June 2022 |
| | | | | JP | 2007-513474 | A | 24 May 2007 |
| | | | | JP | 2008-513474 | A5 | 17 January 2008 |
| | | | | JP | 2012-164662 | A | 30 August 2012 |
| | | | | JP | 5290522 | B2 | 18 September 2013 |
| | | | | JP | 5389963 | B2 | 15 January 2014 |
| | | | | KR | 10-1102169 | B1 | 02 January 2012 |
| | | | | KR | 10-1160779 | B1 | 02 July 2012 |
| | | | | KR | 10-2006-0120117 | A | 24 November 2006 |
| | | | | US | 2005-0112462 | A1 | 26 May 2005 |
| | | | | US | 2008-0076022 | A1 | 27 March 2008 |
| | | | | US | 2010-0221588 | A1 | 02 September 2010 |
| | | | | US | 2011-0250490 | A1 | 13 October 2011 |
| | | | | US | 7968230 | B2 | 28 June 2011 |
| | | | | US | 8642212 | B2 | 04 February 2014 |
| | | | | WO | 2005-053067 | A2 | 09 June 2005 |
| | | | | WO | 2005-053067 | A3 | 20 April 2006 |
| KR | 10-2023-0058295 | A | 03 May 2023 | CN | 116014261 | A | 25 April 2023 |
| | | | | CN | 219350328 | U | 14 July 2023 |
| | | | | EP | 4376139 | A1 | 29 May 2024 |
| | | | | JP | 2024-503460 | A | 25 January 2024 |
| | | | | US | 2024-0413445 | A1 | 12 December 2024 |
| | | | | WO | 2023-068893 | A1 | 27 April 2023 |
| KR | 10-2023-0058304 | A | 03 May 2023 | EP | 4386887 | A1 | 19 June 2024 |
| | | | | JP | 2024-509211 | A | 29 February 2024 |
| | | | | US | 2024-0421359 | A1 | 19 December 2024 |
| | | | | WO | 2023-068900 | A1 | 27 April 2023 |
| JP | 2011-216436 | A | 27 October 2011 | JP | 5433484 | B2 | 05 March 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190175

- KR 1020240191913